# EUROPEAN PATENT SPECIFICATION

(11) **EP 2 948 742 B1**
(45) Date of publication and mention of the grant of the patent: **04.10.2023**
(21) Application number: 14742930.2
(22) Date of filing: 27.01.2014
(51) Int. Cl.: G01F 1/42, F16K 1/22

(54) **ROTATABLE ORIFICE PLATE FOR DIRECT FLOW MEASUREMENT**
DREHBARE BOHRUNGSPLATTE FÜR DIREKTE FLUSSMESSUNG
PLAQUE À ORIFICE ROTATIVE POUR MESURE D'ÉCOULEMENT DIRECTE

(30) Priority: 25.01.2013 US 201361756814 P
(43) Date of publication of application: 02.12.2015
(73) Proprietor: Fluid Handling LLC., Morton Grove, IL 60053 (US)
(72) Inventor: EVANS, Jr., Stanley P., Tinley Park, Illinois 60477 (US); ROSCA, Florin, Niles, Illinois 60714 (US); NAIR, Mahesh, Evanston, Illinois 60202 (US); WELEKAR, Gujarat, Jashodanagar Ahmedabad-Gujarat 382445 (IN)
(74) Representative: DREISS Patentanwälte PartG mbB
(86) International application number: PCT/US2014/013119
(87) International publication number: WO 2014/117055

(56) References cited:
- CN-Y- 201 344 808
- GB-A- 373 651
- JP-A- H11 183 213
- US-A- 568 524
- US-A- 1 569 305
- US-A- 2 574 198
- US-A- 3 610 286
- US-A- 3 695 105
- US-A- 3 805 612
- US-A- 4 562 744
- US-A- 4 750 370
- US-A- 4 750 370
- US-A1- 2004 118 219
- US-A1- 2008 307 896

## Description

### BACKGROUND OF THE INVENTION

### 1. Field of the Invention

The present invention relates to a technique for providing a direct flow measurement; and more particularly, the present invention relates to a valve configured for providing a direct flow measurement.

### 2. Brief Description of Related Art

Presently, most known systems where a fluid flows at a constant rate require a separate permanent flow measurement device to verify the system flow rate. These additional components in the system take up extra space and increase the head loss in a pressure dependent system. Significant amounts of extra pipe length may be required depending on the type of flow measurement device being used. Permanent flow measurement devices in fluid flow systems are also subject to scale or suspended matter build up. GB373651-A discloses a differential flow meter with a housing for mounting a rotatable orifice plate and tubes in the housing and plug valve. US3695105-A discloses a valve comprising a housing having a rotational rotor having rotational movement from a first position maintaining fluid communication through the valve to a second position in which said rotor blocks flow. The rotor has oppositely disposed, pressure tapping orifices which face upstream and downstream, respectively. As the pressure differential varies as a function of the percentage of the opening at the valve fluid passage orifice, a meter reading directly indicates the percentage of the opening of the valve.

### SUMMARY OF THE INVENTION

The present invention provides for a new and unique technique, device or feature that enables a direct fluid flow measurement to be obtained through an orifice plate that can be temporarily employed in any system with a means of pressure independent flow regulation and requiring constant flow.

The present invention, which incorporates temporary direct flow measurement in a fluid flow system and reduces the overall amount of components needed in the system when used in conjunction with a pressure independent flow control device, provides one temporary head loss location when determining overall system head loss requirements, as the changes in pressure drop caused by employing the rotatable orifice when measuring flow are compensated by the differential pressure regulator of the pressure independent flow control device. The temporary nature of the rotatable orifice plate prevents scale or matter from collecting in the device and eliminates the need for maintenance to clean or replace a fixed orifice device.

The present invention includes an orifice plate used for flow measurement that can be rotated perpendicularly into or out of the path of flow if desired by the operator. The operator can rotate the orifice plate into the flow path to use the device as a momentary means of flow measurement to verify the volumetric rate of fluid flow through the device. When used in conjunction with a pressure independent flow control device downstream, the momentary pressure drop incurred when the orifice plate is engaged will be compensated by the pressure regulator within the pressure independent flow control device, maintaining constant fluid flow in the system. When flow measurement is complete, the operator can rotate the orifice plate out of the flow path.

The orifice plate may be installed in the device via pivots along a desired axis of rotation. A handle or dial would control the rotation of one pivot, which would in turn control the position of the orifice plate. The orifice plate may have a fixed calibrated inner diameter. Pressure taps may be located immediately upstream and downstream of the orifice plate, and will be sensed and used to determine upstream and downstream pressures, respectively. Port features in the device body or housing will allow the pressure taps to be measured. Flow may be determined by applying the measured pressure differential between the upstream and downstream taps in relation to the flow coefficient of the calibrated orifice plate, when it rotated into position, perpendicular to the flow.

An alternate embodiment may include separate interchangeable orifice inserts that could allow different flow rates and conditions to be measured. The orifice itself can be eccentric to the diameter of the plate perpendicular in the fluid flow in accordance with the type of fluid flowing in the system. Fluids with high concentrations of particulates may require that an eccentric orifice be used. Likewise, a segmental or quadrant radius type orifice could be used in this orifice plate.

Flow measurement could also occur using a flow nozzle or generalized nozzle in place of the fixed orifice. Either type of nozzle can also have the same effect. Flow would be similarly calculated with the flow coefficient changing to suit the design of the orifice or nozzle. The pressure taps could be in any orientation on the device. Use of a pressure independent flow control device, such as a pressure independent control valve or pressure independent flow limiter, ensures constant flow when the flow measurement device is engaged.

Another embodiment of the rotatable orifice plate may use an integrated port feature in the axis of the orifice plate to permit one of the pressure taps to be measured.

The rotatable orifice can be employed as its own device, or it can be incorporated into a pressure independent control valve or other flow control device.

### Examples of Particular Embodiments

According to some embodiments, the present invention takes the form of an apparatus comprising a valve having a valve housing or body in combination with a rotatable orifice plate.

The valve body or housing is configured to be arranged in, or form part of, a piping having a fluid flow, and also configured with at least one pressure tap arranged at at least one location along the piping to allow pressure of the fluid flow of the piping to be measured. The rotatable orifice plate having an orifice configured or formed therein, and configured to rotate in the valve body or housing on an axis of rotation positioned at a different location along the piping than the at least one pressure tap for rotating between a first rotatable position for providing a normal fluid flow operation and a second rotatable position substantially perpendicular to the fluid flow for providing a direct flow measurement of the fluid flow, so that the direct flow measurement of the fluid flow can be determined based at least partly on signaling sensed by at least one pressure tap sensor containing information about a measured pressure at the at least one pressure tap when the orifice plate is in the second rotatable position.

The present invention may include one or more of the following additional features:
The at least one pressure tap may include an upstream pressure tap at an upstream location along the piping to allow upstream pressure of the fluid flow of the pipe to be measured and a downstream pressure tap at a downstream location along the piping to allow downstream pressure of the fluid flow of the pipe to be measured, so that the direct flow measurement of the fluid flow may be determined based at least partly on the signaling sensed by upstream and downstream pressure tap sensors containing information about a measured pressure differential between upstream and downstream pressure taps in relation to the flow coefficient of the calibrated orifice when the orifice plate is in the second rotatable position.

The apparatus may include a signal processor or processing module configured at least to: receive the signaling from upstream and downstream pressure tap sensors, and determine the direct flow measurement of the fluid flow, based at least partly on the signaling received.

The axis of rotation of the orifice plate may be configured between upstream and downstream locations along the piping.

The orifice plate includes an orifice plate stem having an integrated axial pressure tap configured therein along the axis of rotation to permit one pressure tap to be measured.

The orifice plate may include at least one integrated corresponding upstream or downstream tap configured therein; and the apparatus may include an orifice plate stem having an integrated axial pressure tap configured therein along the axis of rotation to permit the at least one integrated corresponding upstream or downstream tap to be measured.

The orifice plate may be configured as a ring-like structure having a thickness to substantially allow the fluid flow passed the orifice plate when rotated into the first rotatable position, the ring configured to form a calibrated orifice with a flow coefficient to allow the calibrated fluid flow through the orifice plate when rotated into the second rotatable position.

The apparatus may include an actuator, including a handle, configured to rotate the orifice plate between first and second rotatable positions.

The orifice plate may include, or takes the form of, separate interchangeable orifice inserts that are configured to allow different flow rates and conditions to be measured.

The orifice plate takes the form of a calibrated orifice plate that may be configured to be eccentric to the diameter of the orifice plate

The eccentricity of the calibrated orifice plate may be based at least partly on, or in accordance with, a type of fluid flowing in the pipe, including where fluids with high concentrations of particulates may require that an eccentric orifice be used, including a segmental or quadrant radius type orifice.

The orifice plate may include, or take the form of, a flow nozzle or generalized nozzle.

The orifice plate may be configured with an integrated port in the axis of the orifice plate configured to permit at least one upstream or downstream pressure tap to be measured.

The orifice plate may include orifice plate members configured with corresponding upstream or downstream pressure taps in fluidic communication with the upstream and downstream pressure taps to determine the measured pressure differential. The orifice plate may be configured with circumferential channels to allow fluid flow when the orifice plate in the first rotatable position for providing the normal fluid flow operation.

The apparatus may include a signal processor or processing module configured at least to: receive the signaling from the upstream and/or downstream pressure tap sensors, and determine the direct flow measurement of the fluid flow, based at least partly on the signaling received.

One advantage of the present invention is that it provides for a feature that enables direct flow measurement to be obtained through a valve in any system where there is fluid flowing. The present invention, which incorporates direct flow measurement in the sealing body or valve ball of the isolation valve reduces the overall amount of components needed in the system, and provides one head loss location when determining overall system head loss requirements, and positive shut-off.

### BRIEF DESCRIPTION OF THE DRAWING

The drawing includes the following Figures, not drawn to scale:

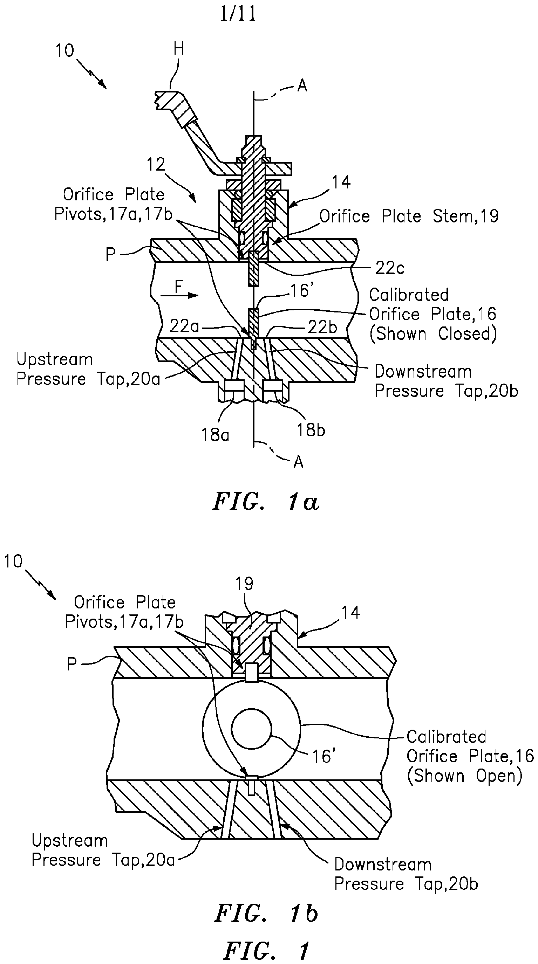

Figures 1, 3 to 7 show embodiments not forming part of the invention according to claim 1.
Figure 1 includes Figs. 1 a and 1 b showing cross-section views of a valve having a valve body or housing configured to be arranged in, or form part of, piping, where Fig. 1 a shows the valve configured in relation to lower upstream and downstream pressure taps in the piping, and also shows a calibrated orifice plate pivoted perpendicular (closed) to the direction of fluid flow, and where Fig. 1 b shows the calibrated orifice plate in Fig. 1 a pivoted parallel (open) to the direction of fluid flow, both according to some embodiments of the present invention.

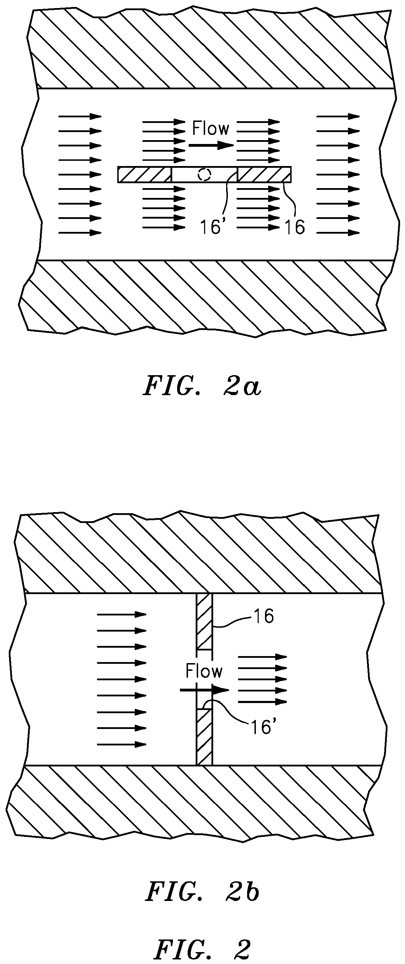

Figure 2 includes Figs. 2a and 2b, where Fig. 2a is a diagram of the calibrated orifice plate shown in Fig. 1 a pivoted perpendicular (closed) to the direction of fluid flow, and where Fig. 2b is a diagram of the calibrated orifice plate in Fig. 1 b pivoted parallel (open) to the direction of fluid flow, both according to some embodiments of the present invention.

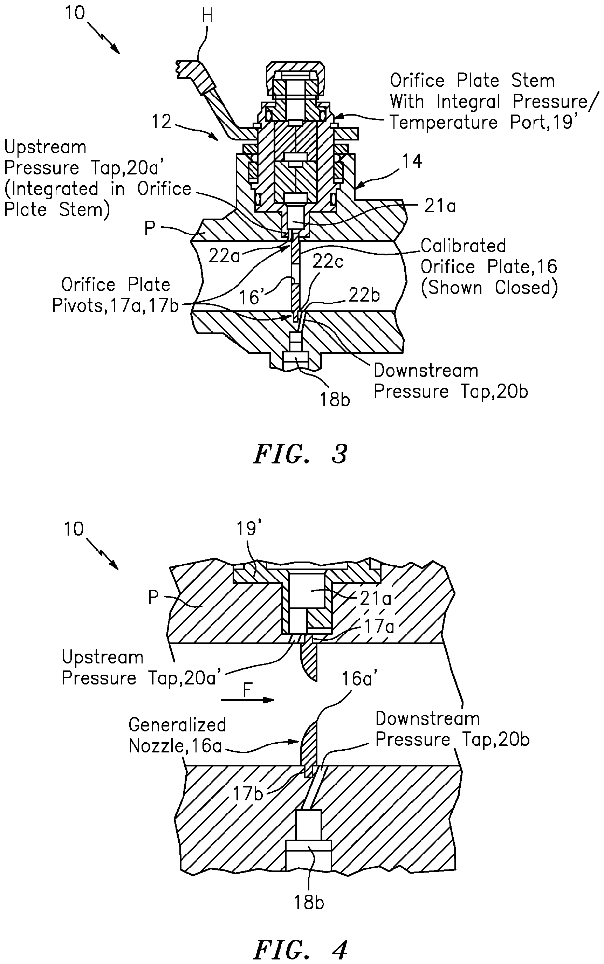

Figure 3 is a cross-sectional view of a valve having a valve body or housing configured to be arranged in, or form part of, piping with an upper upstream pressure tap integrated in an orifice plate stem, with a lower downstream pressure tap configured in the piping, and with a calibrated orifice plate pivoted perpendicular (closed) to the direction of fluid flow, according to some embodiments of the present invention.
Figure 4 is a cross-sectional view of a valve having a valve body or housing configured to be arranged in, or form part of, piping with an upper upstream pressure tap integrated in an orifice plate stem, with a lower downstream pressure tap configured in the piping, and with a generalized nozzle pivoted perpendicular (closed) to the direction of fluid flow, according to some embodiments of the present invention.

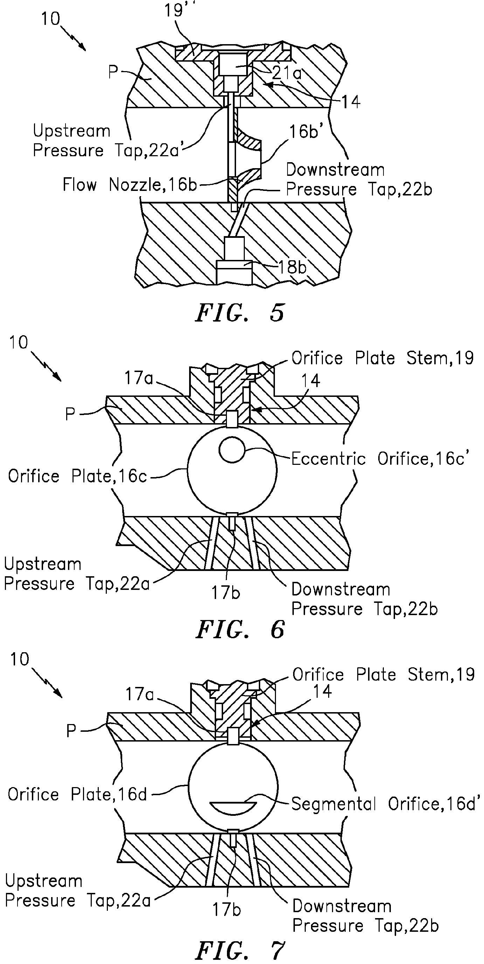

Figure 5 is a cross-sectional view of a valve having a valve body or housing configured to be arranged in, or form part of, piping with an upper upstream pressure tap integrated in an orifice plate stem, with a lower downstream pressure tap configured in the piping, and with a flow nozzle pivoted perpendicular (closed) to the direction of fluid flow, according to some embodiments of the present invention.
Figure 6 is a cross-sectional view of a valve having a valve body or housing configured to be arranged in, or form part of, piping with lower upstream and downstream pressure taps configured therein and with a calibrated orifice plate with an eccentric orifice pivoted parallel (open) to the direction of fluid flow, according to some embodiments of the present invention.
Figure 7 is a cross-sectional view of a valve having a valve body or housing configured to be arranged in, or form part of, piping with lower upstream and downstream pressure taps configured therein and with a calibrated orifice plate with an eccentric segmental orifice pivoted parallel (open) to the direction of fluid flow, according to some embodiments of the present invention.

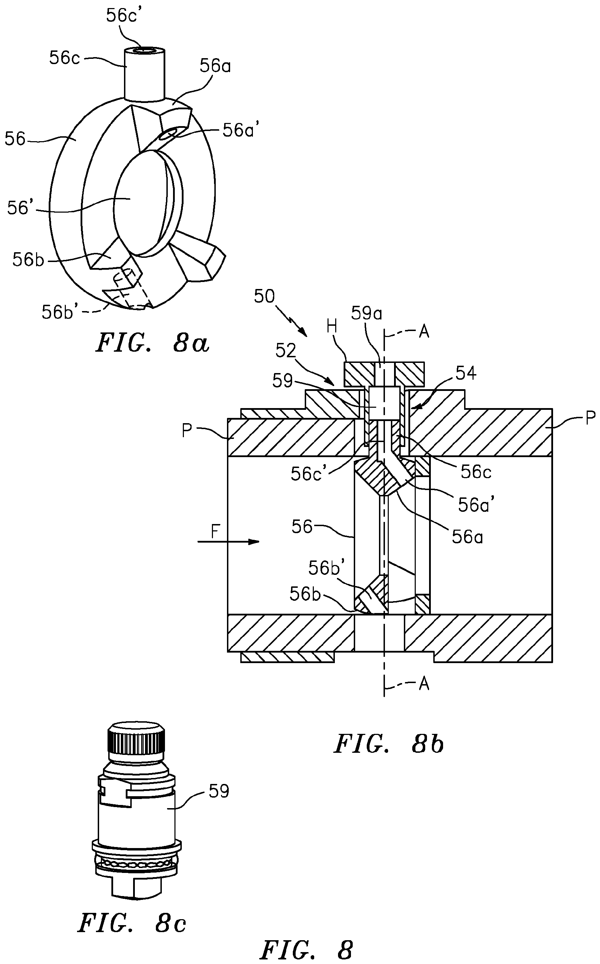

Figure 8 includes Figs. 8a, 8b and 8c, where Fig. 8a is a perspective view of a calibrated orifice member configured with upstream and downstream pressure taps, where Fig. 8b is a cross-sectional view of a valve having a valve body or housing configured to be arranged in, or form part of, piping with the calibrated orifice member shown in Fig. 8a configured in the valve and pivoted perpendicular (closed) to the direction of fluid flow, and where Fig. 8c is a side view of an orifice plate stem for configuring in the valve shown in Fig. 8b, all according to some embodiments of the present invention.

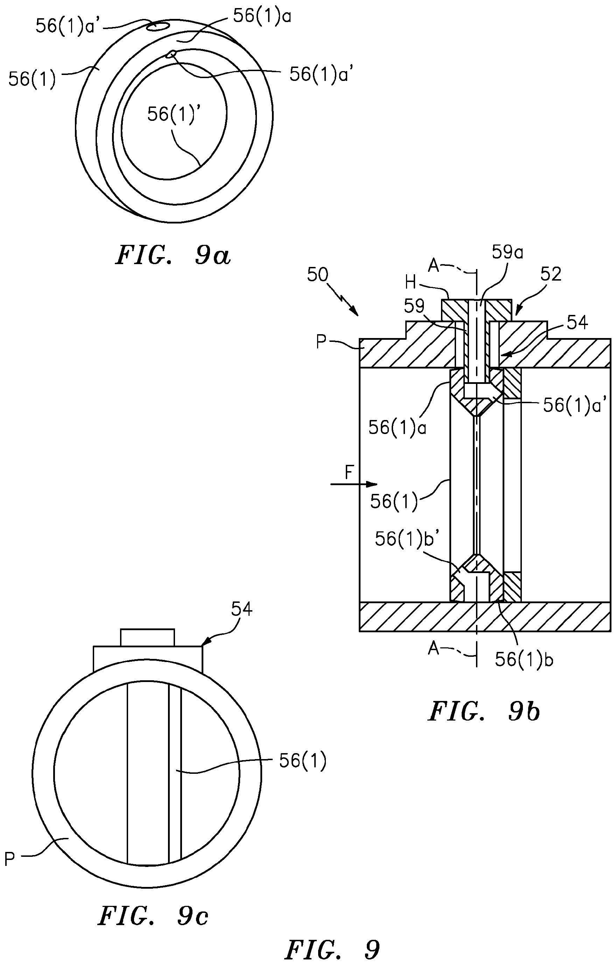

Figure 9 includes Figs. 9a, 9b and 9c, where Fig. 9a is a perspective view of a calibrated orifice member configured with upstream and downstream pressure taps, where Fig. 9b is a cross-sectional view of a valve having a valve body or housing configured to be arranged in, or form part of, piping with the calibrated orifice member shown in Fig. 9a configured in the valve and pivoted perpendicular (closed) to the direction of fluid flow, and where Fig. 9c is a view of the calibrated orifice member shown in Fig. 9a configured in the valve and pivoted parallel (open) to the direction of fluid flow, all according to some embodiments of the present invention.

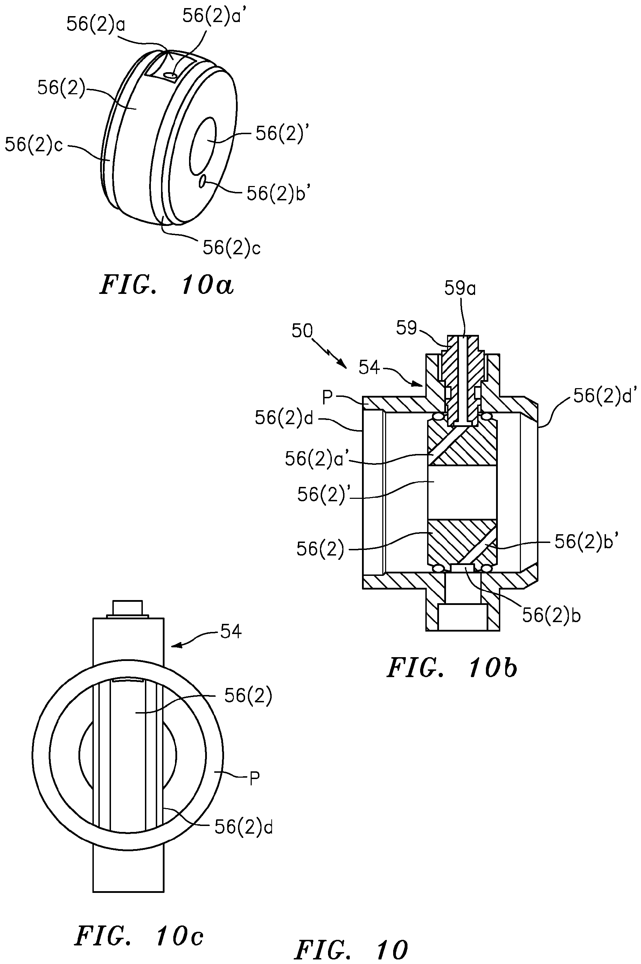

Figure 10 includes Figs. 10a, 10b and 10c, where Fig. 10a is a perspective view of a calibrated orifice member configured with upstream and downstream pressure taps, where Fig. 10b is a cross-sectional view of a valve having a valve body or housing configured to be arranged in, or form part of, piping with the calibrated orifice member shown in Fig. 10a configured in the valve and pivoted perpendicular (closed) to the direction of fluid flow, and where Fig. 10c is a view of the calibrated orifice member shown in Fig. 10a configured in the valve and pivoted parallel (open) to the direction of fluid flow, all according to some embodiments of the present invention.

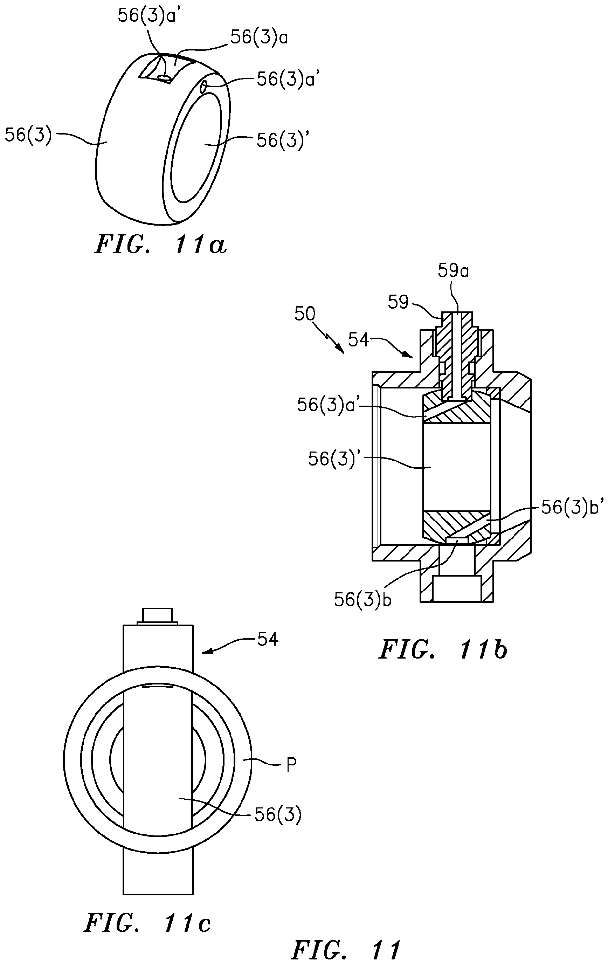

Figure 11 includes Figs. 11a, 11b and 11c, where Fig. 11a is a perspective view of a calibrated orifice member configured with upstream and downstream pressure taps, where Fig. 11b is a cross-sectional view of a valve having a valve body or housing configured to be arranged in, or form part of, piping with the calibrated orifice member shown in Fig. 11a configured in the valve and pivoted perpendicular (closed) to the direction of fluid flow, and where Fig. 11c is a view of the calibrated orifice member shown in Fig. 11a configured in the valve and pivoted parallel (open) to the direction of fluid flow, all according to some embodiments of the present invention.

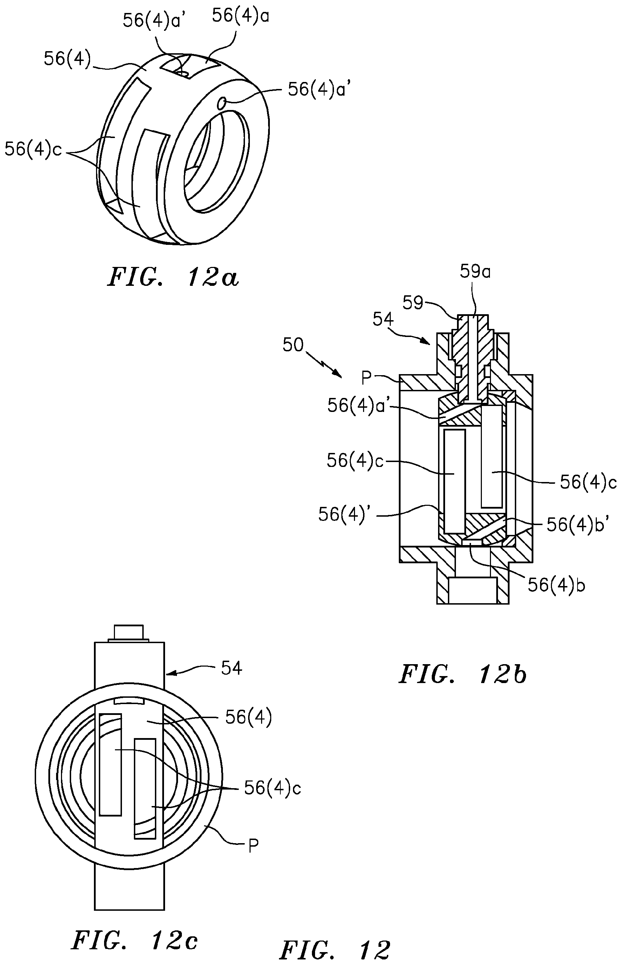

Figure 12 includes Figs. 12a, 12b and 12c, where Fig. 12a is a perspective view of a calibrated orifice member configured with upstream and downstream pressure taps, where Fig. 12b is a cross-sectional view of a valve having a valve body or housing configured to be arranged in, or form part of, piping with the calibrated orifice member shown in Fig. 12a configured in the valve and pivoted perpendicular (closed) to the direction of fluid flow, and where Fig. 12c is a view of the calibrated orifice member shown in Fig. 12a configured in the valve and pivoted parallel (open) to the direction of fluid flow, all according to some embodiments of the present invention.

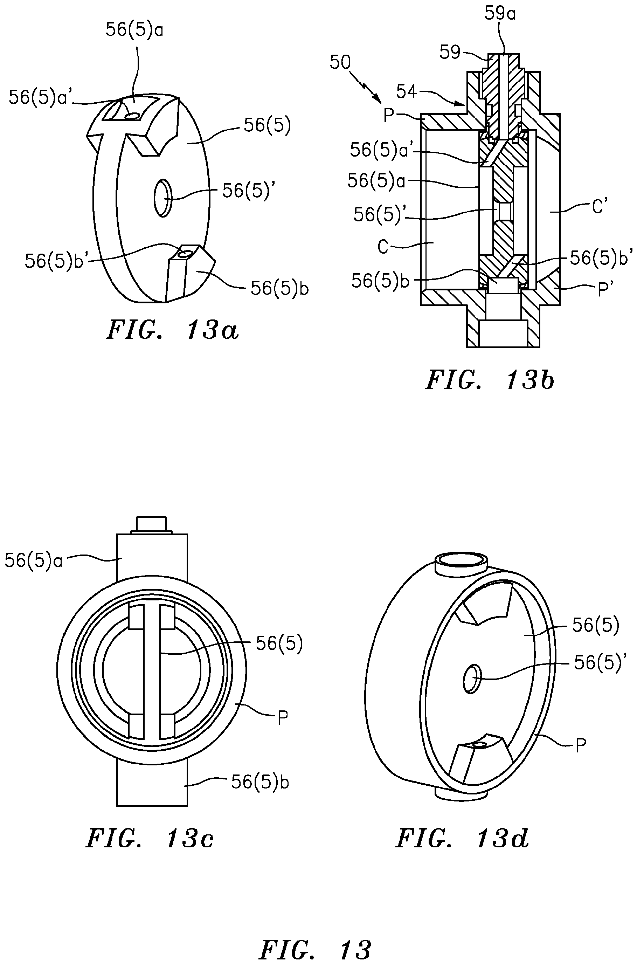

Figure 13 includes Figs. 13a, 13b, 13c and 13d, where Fig. 13a is a perspective view of a calibrated orifice member configured with upstream and downstream pressure taps, where Fig. 13b is a cross-sectional view of a valve having a valve body or housing configured to be arranged in, or form part of, piping with the calibrated orifice member shown in Fig. 13a configured in the valve and pivoted perpendicular (closed) to the direction of fluid flow, and where Fig. 13c is a view of the calibrated orifice member shown in Fig. 13a configured in the valve and pivoted parallel (open) to the direction of fluid flow, and where Fig. 13d is a view of the calibrated orifice member shown in Fig. 13a configured in the valve and pivoted perpendicular (closed) to the direction of fluid flow similar to that shown Figure 13b, all according to some embodiments of the present invention.

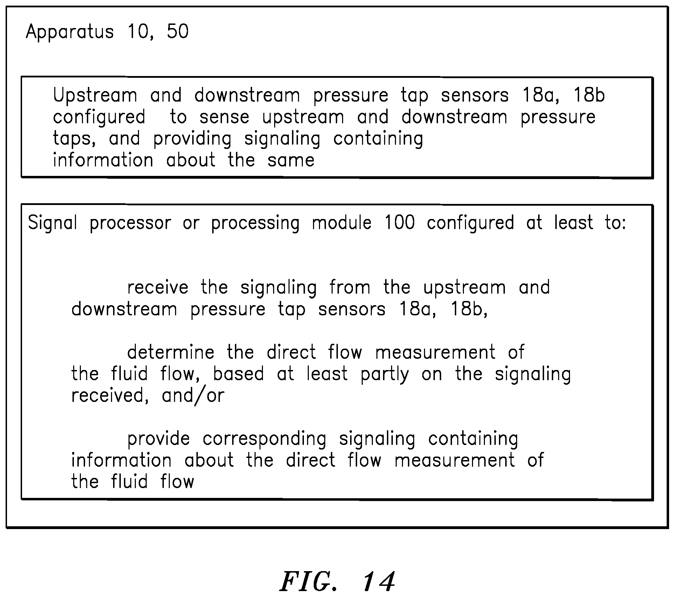

Figure 14 shows a block diagram of a signal processor or signal processing module for implementing signal processing according to some embodiments of the present invention.

### DETAILED DESCRIPTION OF THE INVENTION

### Figures 1 to 7

In general, Figs. 1 and 3-7 all show cross-section views of apparatus generally indicate as 10 having a valve generally indicated as 12 having a valve body or housing generally indicated as 14 configured to be arranged in, or form part of, piping P having a fluid flow F.

In Figs. 1 and 3-7, the valve body or housing 14 is configured with at least one pressure tap 20a, 20b arranged at at least one location 22a, 22b along the piping P to allow pressure of the fluid flow F of the piping P to be measured.

For example, in Figure 1 the valve 12 includes an orifice plate 16 having an opening 16' and configured to rotate in the valve body or housing 14, e.g., on orifice plate pivots 17a, 17b as shown, on an axis A of rotation positioned at a different location 22c along the piping P than the at least one pressure tap 20a, 20b, for rotating between a first rotatable position (see Figure 2a) for providing a normal fluid flow operation and a second rotatable position (see Figure 2b) substantially perpendicular to the fluid flow F for providing a direct flow measurement of the fluid flow F. By way of example, the orifice plate 16 may be rotated by turning an actuator, such as a handle H as shown that is coupled to an orifice plate stem 19 connected to the orifice plate 16.

In operation, the direct flow measurement of the fluid flow F through the orifice plate 16 may be determined, e.g., using the signal processor or signal processing module 100 shown in Figure 14 consistent with that set forth herein, based at least partly on signaling sensed by at least one pressure tap sensor 18a, 18b containing information about a measured pressure at the at least one pressure tap 20a, 20b when the orifice plate 16 is in the second rotatable position (see Figure 2b).

As would be appreciated by one skilled in the art, the orifice plate stem 19 as shown herein may include other components consistent with that shown, including a stem component, an O-ring component, a locking mechanism for coupling the handle H to the stem, etc., which are not described in detail, since they do not form part of the underlying invention, and could be implemented by one skilled in the art without undue experimentation.

As would be appreciated by one skilled in the art, pressure tap sensors like elements 18a, 18b configured to sense fluid pressure and providing signaling containing information about the same, are known in the art, and the scope of the invention is not intended to be limited to any particular type or kind thereof either now known or later developed in the future.

In Figures 1 to 7, similar elements or components are typically referenced with similar reference numerals for the sake of consistency. Moreover, it is also understood that not every Figure will contain every reference label so as to reduce clutter in the drawing.

### Figure 3: The integrated pressure tap

Figure 3 shows an embodiment in which an upper upstream pressure tap 20a' may be integrated in the orifice plate stem 19' at an upstream location 22a along the piping P, and a lower downstream pressure tap 20b may be configured in the piping P at a downstream location 22b along the piping P. The calibrated orifice plate 16 has an opening 16' and may be pivoted perpendicular (closed) to the direction of fluid flow F, consistent with that shown in Figure 2b. The calibrated orifice plate 16 may also be pivoted at the location 22c along the piping P, consistent with that also shown in Figure 1a.

The orifice plate stem 19' may also be configured with a corresponding pressure tap/port 21a for providing and sensing the upstream fluid flow with an upstream pressure tap sensor like element 18a, consistent with that shown in Figure 1a. See also that disclosed in the aforementioned application serial no. 13/681,628 (Atty docket no. F-B&G-X0003//911-19.6-1). The piping P may be configured with a downstream pressure tap sensor like element 18b for sensing the downstream fluid flow, e.g., consistent with that shown in Figure 1a.

Consistent with that set forth herein, the scope of the invention is intended to include either the piping P or the valve housing or body 14 being configured with the upstream or downstream pressure taps. In Figure 3, it is understood that some part of either the piping P or the valve housing or body 14 may be configured to allow for fluidic communication of the upstream fluid and the corresponding pressure tap/port 21a configured in the orifice plate stem 19'.

The scope of the invention is intended to include, and embodiments are envisioned in the spirit of the underlying invention in which, the lower downstream pressure tap 20b may be also configured as an integrated pressure tap, similar to, or consistent with, the integrated upper pressure tap 22a'.

### Figure 4: the Generalized Nozzle

Figure 4 shows an embodiment in which an upper upstream pressure tap 22a' is integrated in the orifice plate stem 19' and a lower downstream pressure tap 22b may be configured in the piping P, e.g., consistent with that shown in Figure 3. In addition, the orifice plate may be configured as a generalized nozzle 16a having an opening 16a' and pivoted perpendicular (closed) to the direction of fluid flow, e.g., consistent with that shown in Figures 4 and 2b.

### Figure 5: The Flow Nozzle

Figure 5 shows an embodiment in which an upper upstream pressure tap 22a' may be integrated in the orifice plate stem 19' and a lower downstream pressure tap 22b may be configured in the piping P, e.g., consistent with that shown in Figures 3-4. In addition, the orifice plate may be configured as a flow nozzle 16b has an opening 16b' and pivoted perpendicular (closed) to the direction of fluid flow, consistent with that shown in Figures 5 and 2b. In Figure 5, by way of example, the opening 16b' of flow nozzle 1 6b may be configured so as to be tapered inwardly, as shown.

### Figure 6: The Eccentric Orifice

Figure 6 shows an embodiment in which the orifice plate may take the form of a calibrated orifice plate 16c that may be configured with an eccentric orifice 16c' pivoted parallel (open) to the direction of fluid flow F.

The eccentric orifice 16c' may be configured off-center as shown, and may include shapes such as a circle, as shown, as well as other types or kind of shapes, including oval, square, rectangular, triangular, etc. The scope of the invention is intended to include other types or kinds of shapes either now known or later formulated in the future.

The eccentric orifice 16c' may also be configured with a certain type of dimensionality and proportionality in relation to the calibrated orifice plate 16c as a whole, e.g., including being scaled larger or smaller than that shown in Figure 6. Moreover, the scope of the invention is not intended to be limited to any particular type or kind of dimensionality or proportionality.

### Figure 7: The Segmented Orifice

Figure 7 shows an embodiment in which the orifice plate may take the form of a calibrated orifice plate 16d that may be configured with a segmented orifice 16d' pivoted parallel (open) to the direction of fluid flow F.

The segmented orifice 16d' may be configured off-center as shown, and may include shapes such as a semi-circle, as shown, as well as other types or kind of shapes, including semi-oval, square, rectangular, triangular, etc. The scope of the invention is intended to include other types or kinds of shapes either now known or later formulated in the future.

The segmented orifice 16d' may be configured with a certain type of dimensionality and proportionality in relation to the calibrated orifice plate 16d as a whole, e.g., including being scaled larger or smaller than that shown in Figure 7. Moreover, the scope of the invention is not intended to be limited to any particular type or kind of dimensionality or proportionality.

### Figures 8 to 13

Similar to that shown in Figs. 1 and 3-7, Figures 8-13 also all show cross-section views of an apparatus generally indicated as 50 having a valve generally indicated as 52 having a valve body or housing generally indicated as 54 configured to be arranged in, or form part of, piping P having a fluid flow F.

However, in contrast to that shown in that shown in Figs. 1 and 3-7, Figs. 8-13 all show embodiments according to the invention in which an orifice plate 56 is configured in relation to an orifice plate stem 59 having at least one integrated axial pressure tap 59a configured therein along the axis A of rotation to permit a pressure tap, e.g., configured in the orifice plate 56 to be measured. For example, in further contrast to that shown in that shown in Figs. 1 and 3-7, the orifice plate 56 may also be configured with at least one tap member 56a, 56b having at least one integrated corresponding upstream or downstream tap 56a', 56b' configured therein. In Figures 8 to 13, similar elements are typically referenced with similar reference numerals for the sake of consistency. Moreover, it is also understood that not every Figure will contain every reference label so as to reduce clutter in the drawing.

### Figure 8

Figs. 8a and 8b show an embodiment according to the present invention in which the calibrated orifice plate 56 has an opening 56' and may be configured with the at least one tap member 56a, 56b having the at least one integrated corresponding upstream or downstream tap 56a', 56b' configured or formed therein. The at least one tap member 56a, 56b, e.g., may be configured with an angled and beveled configuration or formation, consistent with that shown. The at least one integrated corresponding upstream or downstream tap 56a', 56b' may be configured to pass through the at least one tap member 56a, 56b, as shown.

In Figs. 8a and 8b, the calibrated orifice plate 56 may include a channel portion 56c configured with a channel 56c' to be in fluidic communication with the at least one integrated axial pressure tap 59a of the orifice plate stem 59. The calibrated orifice plate 56 is shown pivoted perpendicular (closed) to the direction of fluid flow F, consistent with that shown in Figure 2b.

Fig. 8c shows, by way of example, the orifice plate stem 59 for configuring in the valve 52 shown in Fig. 8b.

### Figure 9

Figs. 9a to 9c show an embodiment according to the present invention in which the orifice plate may take the form of a calibrated orifice plate 56(1) has an opening 56(1)' and may be configured with the at least one tap member or portion 56(1)a, 56(1)b having the at least one integrated corresponding upstream or downstream tap 56(1)a', 56(1)b' configured or formed therein, consistent with that shown. By way of example, the at least one integrated corresponding upstream or downstream tap 56(1)a', 56(1)b' may be configured on an angle to pass through the at least one tap member or portion 56(1)a, 56(1)b, as shown.

In Fig. 9b, the calibrated orifice plate 56(1) is shown pivoted perpendicular (closed) to the direction of fluid flow F, consistent with that shown in Figure 2b.

In Fig. 9c, the calibrated orifice plate 56(1) is shown pivoted parallel (open) to the direction of fluid flow F, consistent with that shown in Figure 2a.

### Figure 10

Figs. 10a to 10c show an embodiment according to the present invention in which the orifice plate may take the form of a calibrated orifice plate 56(2) has an opening 56(2)' and may be configured with the at least one tap member or portion 56(2)a, 56(2)b having the at least one integrated corresponding upstream or downstream tap 56(2)a', 56(2)b' configured or formed therein, consistent with that shown. By way of example, the at least one integrated corresponding upstream or downstream tap 56(2)a', 56(2)b' may be configured on an angle to pass through the at least one tap member or portion 56(2)a, 56(2)b, as shown.

In Figure 10b, the calibrated orifice plate 56(2) is shown configured with O-ring channels 56(2)c for receiving O-rings 56(2)d as shown in Figures 10b and 10c for providing sealing functionality between the piping P or valve housing or body 54 and the calibrated orifice plate 56(2).

In Fig.10b, the calibrated orifice plate 56(2) is shown pivoted perpendicular (closed) to the direction of fluid flow F, consistent with that shown in Figure 2b.

In Fig. 10c, the calibrated orifice plate 56(2) is shown pivoted parallel (open) to the direction of fluid flow F, consistent with that shown in Figure 2a.

### Figure 11

Figs. 11a to 11c show an embodiment according to the present invention in which the orifice plate may take the form of a calibrated orifice plate 56(3) has an opening 56(3)' and may be configured with the at least one tap member or portion 56(3)a, 56(3)b having the at least one integrated corresponding upstream or downstream tap 56(3)a', 56(3)b' configured or formed therein, consistent with that shown. By way of example, the at least one integrated corresponding upstream or downstream tap 56(3)a', 56(3)b' may be configured on an angle to pass through the at least one tap member or portion 56(3)a, 56(3)b, as shown.

In Fig.11b, the calibrated orifice plate 56(3) is shown pivoted perpendicular (closed) to the direction of fluid flow F, consistent with that shown in Figure 2b.

In Fig. 11c, the calibrated orifice plate 56(3) is shown pivoted parallel (open) to the direction of fluid flow F, consistent with that shown in Figure 2a.

In effect, the difference between the embodiment shown in Figure 11 and that shown in Figure 10 is based on using or not using O-ring channels 56(2)c and O-rings 56(2)d configured therein.

### Figure 12

Figs. 12a to 12c show an embodiment according to the present invention in which the orifice plate may take the form of a calibrated orifice plate 56(4) has an opening 56(4)' and may be configured with the at least one tap member or portion 56(4)a, 56(4)b having the at least one integrated corresponding upstream or downstream tap 56(4)a', 56(4)b' configured or formed therein, consistent with that shown. By way of example, the at least one integrated corresponding upstream or downstream tap 56(4)a', 56(4)b' may be configured on an angle to pass through the at least one tap member or portion 56(4)a, 56(4)b, as shown.

In Fig.12b, the calibrated orifice plate 56(4) is shown pivoted perpendicular (closed) to the direction of fluid flow F, consistent with that shown in Figure 2b.

In Fig. 12c, the calibrated orifice plate 56(4) is shown pivoted parallel (open) to the direction of fluid flow F, consistent with that shown in Figure 2a. In Figures 12a to 12c, the calibrated orifice plate 56(4) is shown configured with partially circumferential channels 56(4)c for providing the fluid flow through the orifice plate 56(4) when pivoted parallel (open), consistent with that shown in Figs. 2b and 12c. Figure 12 shows the calibrated orifice plate 56(4) configured with four partially circumferential channels 56(4)c, including two pairs on each side, although the scope of the invention is intended to include using other configurations, such as one partially circumferential channel on each side, or three partially circumferential channels on each side, etc. As best shown in Figure 12c, the pairs of partially circumferential channels 56(4)c on each side are configured to be offset, e.g., so one partially circumferential channels 56(4)c (on the left as shown) is slightly higher than the other partially circumferential channels 56(4)c (on the right as shown). In Fig. 12c, the diametrically opposed offset pairs of partially circumferential channels 56(4)c on respective sides of the calibrated orifice plate 56(4) are configured to be substantially in registration with one another, as shown, so the fluid flow can pass through one diametrically opposed offset partially circumferential channels 56(4)c on one respective side of the calibrated orifice plate 56(4), then through the other diametrically opposed offset partially circumferential channels 56(4)c on the other respective side of the calibrated orifice plate 56(4).

The channels 56(4)c may be configured in the outer surface of the orifice plate 56(4) as shown, and may include shapes such as rectangular as shown, as well as other types or kind of shapes, including oval, square, triangular, etc. The scope of the invention is intended to include other types or kinds of shapes either now known or later formulated in the future.

The channels 56(4)c may be configured with a certain type of dimensionality and proportionality in relation to the orifice plate 56(4) as a whole, e.g., including being scaled larger or smaller than that shown in Figures 1 2a to 12c. Moreover, the scope of the invention is not intended to be limited to any particular type or kind of dimensionality or proportionality for providing the fluid flow through the orifice plate 56(4) when pivoted parallel (open), consistent with that shown in Figs. 2b and 12c.

### Figure 13

Figs. 13a to 13d show an embodiment according to the present invention in which the orifice plate may take the form of a calibrated orifice plate 56(5) has an opening 56(5)' and may be configured with the at least one tap member or portion 56(5)a, 56(5)b having the at least one integrated corresponding upstream or downstream tap 56(5)a', 56(5)b' configured or formed therein, consistent with that shown. By way of example, the at least one integrated corresponding upstream or downstream tap 56(5)a', 56(5)b' may be configured on an angle to pass through the at least one tap member or portion 56(5)a, 56(5)b, as shown.

In Fig.13b and 13d, the calibrated orifice plate 56(5) is shown pivoted perpendicular (closed) to the direction of fluid flow F, consistent with that shown in Figure 2b.

In Fig. 13c, the calibrated orifice plate 56(3) is shown pivoted parallel (open) to the direction of fluid flow F, consistent with that shown in Figure 2a. The piping P' (right side) is also shown configured with an inwardly tapered channel C in comparison to the piping P (left side) having the non-tapered channel C.

### Figure 14: Signal Processor 100

According to the present invention, the apparatus 10 may also include a signal processor or signal processing module 100 shown in Figure 14 that may be configured to receive signaling from the upstream and downstream pressure tap sensors 18a, 1 8b (see also Figure 1 ) and to determine the direct flow measurement of the fluid flow, based at least partly on the signaling received. The signal processor 16 may also be configured to provide corresponding signaling containing information about the direct flow measurement of the fluid flow determined. The signal processor 100 may also be configured with a processor and at least one memory device including computer program code, the at least one memory device and the computer program code configured to, with the at least one processor, cause the signal processor at least to implement the signal processing functionality of the apparatus set forth above. A person skilled in the art would understand and appreciate how to implement such a signal processor to perform the aforementioned signal processing functionality without undue experimentation.

By way of example, the functionality of the signal processor 100 may be implemented using hardware, software, firmware, or a combination thereof. In a typical software implementation, the signal processor 100 would include one or more microprocessor-based architectures having at least one microprocessor, random access memory (RAM), read only memory (ROM), input/output devices and control, and data and address buses connecting the same. A person skilled in the art would be able to program such a microcontroller (or microprocessor)-based implementation to perform the functionality described herein without undue experimentation. The scope of the invention is not intended to be limited to any particular implementation using technology either now known or later developed in the future.

### The Scope of the Invention

It should be understood that, unless stated otherwise herein, any of the features, characteristics, alternatives or modifications described regarding a particular embodiment herein may also be applied, used, or incorporated with any other embodiment described herein. Also, the drawings herein are not drawn to scale.

Although the present invention is described by way of example in relation to a centrifugal pump, the scope of the invention is intended to include using the same in relation to other types or kinds of pumps either now known or later developed in the future.

Although the invention has been described and illustrated with respect to exemplary embodiments thereof, the foregoing and various other additions and omissions may be made therein and thereto without departing from the scope of the present invention.

## Claims

1. Apparatus (50) comprising:
a valve (52) having:
a valve body or housing (54) configured to be arranged in, or form part of, a piping (P) having a fluid flow (F), and also configured with at least one pressure tap arranged at at least one location along the piping (P) to allow pressure of the fluid flow (F) of the piping (P) to be measured; and
an orifice plate (56) having an orifice (56') configured or formed therein, and configured to rotate in the valve body or housing (54) on an axis (A) of rotation positioned at a different location along the piping (P) than the at least one pressure tap (56a'; 56b') for rotating between a first rotatable position for providing a normal fluid flow operation and a second rotatable position substantially perpendicular to the fluid flow (F) for providing a direct flow measurement of the fluid flow (F),
so that the direct flow measurement of the fluid flow (F) may be determined based at least partly on signaling sensed by at least one pressure tap sensor containing information about a measured pressure at the at least one pressure tap (56a'; 56b') when the orifice plate (56) is in the second rotatable position, **characterized in that** the orifice plate (56) is configured with two tap members (56a, 56b) each having an integrated corresponding pressure tap (56a', 56b') configured or formed therein and configured to pass therethrough, wherein the tap members (56a, 56b) are configured with an angled and beveled configuration or formation, and **in that** the orifice plate (56) is configured in relation to an orifice plate stem (59) having an integrated axial pressure tap (59a) configured therein along the axis (A) of rotation to permit one of the pressure taps (56a') configured in the orifice plate (56) to be measured, and **in that** the orifice plate (56) includes a channel portion (56c) configured with a channel (56c') to be in fluidic communication with the integrated axial pressure tap (59a) of the orifice plate stem (59).

2. Apparatus (50) according to claim 1, wherein the at least one pressure tap (56a'; 56b') comprises an upstream pressure tap (56b') at an upstream location along the piping (P) to allow upstream pressure of the fluid flow (F) of the piping (P) to be measured and a downstream pressure tap (56a') at a downstream location along the piping (P) to allow downstream pressure of the fluid flow (F) of the piping (P) to be measured, so that the direct flow measurement of the fluid flow (F) may be determined based at least partly on the signaling sensed by upstream and downstream pressure tap sensors containing information about a measured pressure differential between upstream and downstream pressure taps (56a'; 56b') in relation to the flow coefficient of the calibrated orifice (56') when the orifice plate (56) is in the second rotatable position.

3. Apparatus (50) according to claim 2, wherein the axis (A) of rotation of the orifice plate (56) is configured between upstream and downstream locations along the piping (P).

4. Apparatus (50) according to claim 1, wherein the orifice plate (56) is configured as a ring-like structure having a thickness to substantially allow the fluid flow (F) pass the orifice plate (56) when rotated into the first rotatable position, the ring configured to form a calibrated orifice (56') with a flow coefficient to allow the calibrated fluid flow (F) through the orifice plate (56) when rotated into the second rotatable position.

5. Apparatus (50) according to claim 1, wherein the apparatus (50) comprises an actuator, including a handle (H), configured to rotate the orifice plate (56) between first and second rotatable positions.

6. Apparatus (50) according to claim 1, wherein the orifice plate (56) includes, or takes the form of, separate interchangeable orifice inserts that are configured to allow different flow rates and conditions to be measured.

7. Apparatus (50) according to claim 1, wherein the orifice plate (56) takes the form of a calibrated orifice plate configured to be eccentric to the diameter of the orifice plate (56).

8. Apparatus (50) according to claim 7, wherein the eccentricity of the calibrated orifice (56') is based at least partly on, or in accordance with, a type of fluid flowing in the piping (P), including where fluids with high concentrations of particulates may require that an eccentric orifice (56') be used, including a segmental or quadrant radius type orifice.

9. Apparatus (50) according to claim 1, wherein the orifice plate (56) includes, or takes the form of, a flow nozzle or generalized nozzle.

10. Apparatus (50) according to claim 1, wherein the orifice plate (56) is configured with circumferential channels (56(4)c) to allow fluid flow when the orifice plate (56) is in the first rotatable position for providing the normal fluid flow operation.

11. Apparatus (50) according to claim 1, wherein the apparatus (50) comprises a signal processor (100) or processing module configured at least to:
receive the signaling from at least one pressure tap sensor, and
determine the direct flow measurement of the fluid flow (F), based at least partly on the signaling received.

## Patentansprüche

1. Einrichtung (50), umfassend:
ein Ventil (52), das aufweist:
einen/ein Ventilkörper oder -gehäuse (54) der/das konfiguriert ist, um in einer Rohrleitung (P), die einen Fluiddurchfluss (F) aufweist, eingerichtet zu werden oder einen Teil davon zu formen, und auch mit mindestens einem Druckabgriff konfiguriert ist, der an mindestens einer Stelle entlang der Rohrleitung (P) eingerichtet ist, um zu ermöglichen, einen Druck des Fluiddurchflusses (F) der Rohrleitung (P) zu messen; und
eine Blende (56), die eine darin konfigurierte oder geformte Öffnung (56') aufweist, die konfiguriert ist, um sich in dem Ventilkörper oder -gehäuse (54) auf einer Drehachse (A) zu drehen, die an einer unterschiedlichen Stelle entlang der Rohrleitung (P) als der mindestens eine Druckabgriff (56a'; 56b') positioniert ist zum Drehen zwischen einer ersten drehbaren Position zum Bereitstellen eines normalen Fluiddurchflussbetriebs und einer zweiten drehbaren Position im Wesentlichen senkrecht zu dem Fluiddurchfluss (F) zum Bereitstellen einer direkten Durchflussmessung des Fluiddurchflusses (F),
sodass die direkte Durchflussmessung des Fluiddurchflusses (F) bestimmt werden kann, basierend mindestens teilweise auf einer Signalisierung, die von mindestens einem Druckabgriffsensor erfasst wird, der Informationen über einen gemessenen Druck an dem mindestens einen Druckabgriff (56a'; 56b') enthält, wenn sich die Blende (56) in der zweiten drehbaren Position befindet, **dadurch gekennzeichnet, dass** die Blende (56) mit zwei Abgriffelementen (56a, 56b) konfiguriert ist, die jeweils einen integrierten entsprechenden Druckabgriff (56a', 56b') aufweisen, der darin konfiguriert oder geformt ist und konfiguriert ist, um dadurch zu passieren, wobei die Abgriffelemente (56a, 56b) mit einer abgewinkelten und abgeschrägten Konfiguration oder Formung konfiguriert sind, und dass die Blende (56) in Bezug auf einen Blendenschaft (59), der einen darin entlang der Drehachse (A) konfigurierten integrierten axialen Druckabgriff (59a) aufweist, konfiguriert ist, um zu erlauben, einen der in der Blende (56) konfigurierten Druckabgriffe (56a') zu messen, und dass die Blende (56) einen Kanalabschnitt (56c) einschließt, der mit einem Kanal (56c') konfiguriert ist, um in Fluidverbindung mit dem integrierten axialen Druckabgriff (59a) des Blendenschafts (59) zu stehen.

2. Einrichtung (50) nach Anspruch 1, wobei der mindestens eine Druckabgriff (56a'; 56b') einen vorgelagerten Druckabgriff (56b') an einer vorgelagerten Stelle entlang der Rohrleitung (P), um zu ermöglichen, einen vorgelagerten Druck des Fluiddurchflusses (F) der Rohrleitung (P) zu messen, und einen nachgelagerten Druckabgriff (56a') an einer nachgelagerten Stelle entlang der Rohrleitung (P) umfasst, um zu ermöglichen, einen nachgelagerten Druck des Fluiddurchflusses (F) der Rohrleitung (P) zu messen, sodass die direkte Durchflussmessung des Fluiddurchflusses (F) bestimmt werden kann, basierend mindestens teilweise auf der Signalisierung, die von vorgelagerten und nachgelagerten Druckabgriffsensoren erfasst wird, die Informationen über einen gemessenen Druckunterschied zwischen dem vorgelagerten und dem nachgelagerten Druckabgriff (56a'; 56b') in Bezug auf den Durchflusskoeffizienten der kalibrierten Öffnung (56') enthalten, wenn sich die Blende (56) in der zweiten drehbaren Position befindet.

3. Einrichtung (50) nach Anspruch 2, wobei die Drehachse (A) der Blende (56) zwischen vorgelagerten und nachgelagerten Stellen entlang der Rohrleitung (P) konfiguriert ist.

4. Einrichtung (50) nach Anspruch 1, wobei die Blende (56) als eine ringähnliche Struktur konfiguriert ist, die eine Dicke aufweist, die es dem Fluiddurchfluss (F) im Wesentlichen ermöglicht, die Blende (56) zu passieren, wenn sie in die erste drehbare Position gedreht wird, wobei der Ring konfiguriert ist, um eine kalibrierte Öffnung (56') mit einem Durchflusskoeffizienten zu formen, um den kalibrierten Fluiddurchfluss (F) durch die Blende (56) zu ermöglichen, wenn sie in die zweite drehbare Position gedreht wird.

5. Einrichtung (50) nach Anspruch 1, wobei die Einrichtung (50) einen Aktuator umfasst, einschließlich eines Griffs (H), der konfiguriert ist, um die Blende (56) zwischen einer ersten und einer zweiten drehbaren Position zu drehen.

6. Einrichtung (50) nach Anspruch 1, wobei die Blende (56) separate austauschbare Öffnungseinsätze einschließt oder die Form derselben annimmt, die konfiguriert sind, um zu ermöglichen, unterschiedliche Durchflussraten und Bedingungen zu messen.

7. Einrichtung (50) nach Anspruch 1, wobei die Blende (56) die Form einer kalibrierten Blende annimmt, die konfiguriert ist, um exzentrisch zu dem Durchmesser der Blende (56) zu sein.

8. Einrichtung (50) nach Anspruch 7, wobei die Exzentrizität der kalibrierten Öffnung (56') mindestens teilweise auf oder gemäß einer Art von Fluid basiert, das in der Rohrleitung (P) fließt, einschließlich, wo Fluide mit hohen Partikelkonzentrationen erfordern können, dass eine exzentrische Öffnung (56') verwendet wird, einschließlich einer Öffnung einer Segment- oder Quadrantenradiusart.

9. Einrichtung (50) nach Anspruch 1, wobei die Blende (56) eine Durchflussdüse oder eine verallgemeinerte Düse einschließt oder die Form derselben annimmt.

10. Einrichtung (50) nach Anspruch 1, wobei die Blende (56) mit umlaufenden Kanälen (56(4)c) konfiguriert ist, um einen Fluiddurchfluss zu ermöglichen, wenn sich die Blende (56) in der ersten drehbaren Position befindet zum Bereitstellen des normalen Fluiddurchflussbetriebs.

11. Einrichtung (50) nach Anspruch 1, wobei die Einrichtung (50) einen Signalprozessor (100) oder ein Verarbeitungsmodul umfasst, der/das mindestens konfiguriert ist zum:
Empfangen der Signalisierung von mindestens einem Druckabgriffsensor und
Bestimmen der direkten Durchflussmessung des Fluiddurchflusses (F), basierend mindestens teilweise auf der empfangenen Signalisierung.

## Revendications

1. Appareil (50) comprenant:
une vanne (52) ayant:
un corps ou un boîtier de vanne (54) configuré pour être disposé dans, ou faire partie d'une tuyauterie (P) ayant un écoulement de fluide (F), et également configuré avec au moins une prise de pression placée à au moins un emplacement le long de la tuyauterie (P) pour permettre de mesurer la pression de l'écoulement de fluide (F) de la tuyauterie (P); et
une plaque à orifice (56) comportant un orifice (56') configuré ou formé à l'intérieur, et configurée pour tourner dans le corps ou le boîtier de soupape (54) sur un axe (A) de rotation positionné à un emplacement différent le long de la tuyauterie (P) que la au moins une prise de pression (56a'; 56b') pour tourner entre une première position pivotante pour assurer un fonctionnement normal de l'écoulement de fluide et une seconde position pivotante sensiblement perpendiculaire à l'écoulement de fluide (F) pour fournir une mesure directe de l'écoulement de fluide (F),
de sorte que la mesure directe de l'écoulement de fluide (F) puisse être déterminée sur la base, au moins en partie, d'une signalisation captée par au moins un capteur de prise de pression contenant des informations sur une pression mesurée à la au moins une prise de pression (56a'; 56b') lorsque la plaque à orifice (56) est dans la seconde position pivotante, **caractérisé en ce que** la plaque à orifice (56) est configurée avec deux éléments de prise de pression (56a; 56b) chacun ayant une prise de pression correspondante intégrée (56a', 56b') configurée ou formée à l'intérieur et configurée pour passer à travers, dans lequel les éléments de la prise (56a, 56b) sont configurés avec une configuration ou une formation angulaire et biseautée, et **en ce que** la plaque à orifice (56) est configurée en relation avec une tige de plaque à orifice (59) ayant une prise de pression axiale intégrée (59a) configurée à l'intérieur le long de l'axe (A) de rotation pour permettre à l'une des prises de pression (56a') configurées dans la plaque à orifice (56) d'être mesurée, et **en ce que** la plaque à orifice (56) comprend une partie de canal (56c) configurée avec un canal (56c') pour être en communication fluidique avec la prise de pression axiale intégrée (59a) de la tige de la plaque à orifice (59).

2. Appareil (50) selon la revendication 1, dans lequel la au moins une prise de pression (56a'; 56b') comprend une prise de pression amont (56b') à un emplacement amont le long de la tuyauterie (P) pour permettre la mesure de la pression amont de l'écoulement de fluide (F) de la tuyauterie (P) et une prise de pression aval (56a') à un emplacement aval le long de la tuyauterie (P) pour permettre la mesure de la pression aval de l'écoulement de fluide (F) de la tuyauterie (P), de sorte que la mesure directe d'écoulement de fluide (F) puisse être déterminée sur la base, au moins en partie, de la signalisation captée par les capteurs de prise de pression amont et aval contenant des informations sur un différentiel de pression mesuré entre les prises de pression amont et aval (56a'; 56b') en relation avec le coefficient de débit de l'orifice étalonné (56') lorsque la plaque à orifice (56) est dans la seconde position pivotante.

3. Appareil (50) selon la revendication 2, dans lequel l'axe (A) de rotation de la plaque à orifice (56) est configuré entre des emplacements amont et aval le long de la tuyauterie (P).

4. Appareil (50) selon la revendication 1, dans lequel la plaque à orifice (56) est configurée comme une structure en forme d'anneau ayant une épaisseur pour permettre sensiblement l'écoulement de fluide (F) à travers la plaque à orifice (56) lorsqu'elle est tournée dans la première position pivotante, l'anneau configuré pour former un orifice étalonné (56') avec un coefficient d'écoulement pour permettre l'écoulement de fluide étalonné (F) à travers la plaque à orifice (56) lorsqu'elle est tournée dans la seconde position pivotante.

5. Appareil (50) selon la revendication 1, dans lequel l'appareil (50) comprend un actionneur, comprenant une poignée (H), configuré pour faire tourner la plaque à orifice (56) entre la première et la seconde position pivotante.

6. Appareil (50) selon la revendication 1, dans lequel la plaque à orifice (56) comprend des, ou prend la forme d'inserts d'orifices interchangeables séparés qui sont configurés pour permettent de mesurer différents débits et conditions d'écoulement.

7. Appareil (50) selon la revendication 1, dans lequel la plaque à orifice (56) prend la forme d'une plaque à orifice étalonnée configurée pour être excentrée par rapport au diamètre de la plaque à orifice (56).

8. Appareil (50) selon la revendication 7, dans lequel l'excentricité de l'orifice étalonné (56') est basée au moins en partie sur, ou en accord avec, un type de fluide s'écoulant dans la tuyauterie (P), comprenant lorsque des fluides avec des concentrations élevées de particules peuvent nécessiter l'utilisation d'un orifice excentrique (56'), comprenant un orifice de type segmentaire ou à rayon quadrant.

9. Appareil (50) selon la revendication 1, dans lequel la plaque à orifice (56) comprend, ou prend la forme d'une buse d'écoulement ou d'une buse généralisée.

10. Appareil (50) selon la revendication 1, dans lequel la plaque à orifice (56) est configurée avec des canaux circonférentiels (56(4)c) pour permettre l'écoulement de fluide lorsque la plaque à orifice (56) est dans la première position pivotante pour assurer le fonctionnement normal de l'écoulement de fluide.

11. Appareil (50) selon la revendication 1, dans lequel l'appareil (50) comprend un processeur de signal (100) ou un module de traitement configuré au moins pour:
recevoir la signalisation d'au moins un capteur de prise de pression, et
déterminer la mesure directe de l'écoulement de fluide (F), sur la base, au moins en partie, de la signalisation reçue.
